# EUROPEAN PATENT APPLICATION

(11) **EP 0 780 802 A2**
(43) Date of publication of application: **25.06.1997**
(21) Application number: 96308946.1
(22) Date of filing: 10.12.1996
(51) Int. Cl.: G07B 15/00

(54) **Wireless billing system**

(30) Priority: 19.12.1995 US 591186
(71) Applicant: AT&T Corp., New York, NY 10013-2412 (US)
(72) Inventor: Salimando, Steven Charles, Little Silver, New Jersey 07739 (US)
(74) Representative: Buckley, Christopher Simon Thirsk

(57) **Abstract**

In a preferred embodiment, a method of billing comprises electronically transferring identifying information of a purchaser from a wireless terminal of the purchaser to a merchant's billing device to initiate a transaction between the purchaser and the merchant, creating an electronic record of the transaction between the purchaser and the merchant where the record contains at least the identifying information and an amount transacted and billing the purchaser for the amount transacted. The identifying information, e.g., Caller ID data, can be electronically transferred to the merchant billing device via a wireless telecommunication network. Alternatively, a local proximity connection between the purchaser's wireless terminal and the merchant billing device can be used. A processor within the billing device retrieves information related to the purchase either from a memory within the billing device or from an electronic cash register external to the billing device. The processor can command a control circuit to deliver the service or merchandise such as raising a toll booth gate to allow a vehicle to pass. The processor then constructs the electronic transaction record, which is subsequently transmitted to a centralized billing location or database.

## Description

### BACKGROUNG OF THE INVENTION

### 1. Field of the Invention

The subject invention relates to a billing system and, more particularly to a fee or toll collection system, which employs wireless communications.

### 2. Description of Related Art

The manual collection of fees and tolls for purchased goods and services has existed from time immemorial. Such activities are often implemented with the physical presence of toll collectors and cashiers or devices for accomplishing their analogous functions. With the increasing number of vehicles traveling on toll roads, conventional toll collection methods can have a negative effect on traffic flow. Similarly, the use of conventional cash registers in self-service stores can have an undesirable effect on the flow of patrons on a checkout line.

Attempts have been made to overcome existing manual toll collection problems by providing coin-operated collection devices. However, these devices require exact change disbursements and are susceptible to the fraudulent use of counterfeit coins or tokens.

Recently, automated toll collection systems have been introduced that employ radio frequency communication devices that deduct tolls electronically from a secured set of funds as a particular vehicle passes through a toll plaza. See, for example, U.S. Patent No. 5,424,727 to Shieh, and commonly assigned U.S. Patent No. 5,310,999 to Claus et al. In these systems, each vehicle must possess a special transmitter to provide communication with the toll collection device.

### SUMMARY OF THE INVENTION

Embodiments of the present invention provide systems and methods that utilize wireless terminals, e.g., cellular telephones, as a means for paying for tolls or for other services or merchandise.

In a preferred embodiment, a method of billing comprises electronically transferring identifying information of a purchaser from a wireless terminal of the purchaser to a merchant's billing device to initiate a transaction between the purchaser and the merchant, creating an electronic record of the transaction between the purchaser and the merchant where the record contains at least the identifying information of the purchaser and an amount transacted and billing the purchaser for the amount transacted.

The step of electronically transferring information can be performed via a wireless telecommunication network. In this method, the purchaser can use a conventional wireless terminal, e.g., a cellular telephone, to dial the billing device's telephone number, such that the billing device receives the call along with the identifying information of the purchaser, which can be Caller ID data. The billing device then either disconnects the call attempt or maintains an end-to-end connection with the purchaser's wireless terminal during the course of the transaction. A processor within the billing device retrieves information related to the purchase, either from a memory within the billing device, or from an electronic cash register external to the billing device. The processor can command a control circuit to deliver the service or merchandise, such as raising a toll booth gate to allow a vehicle to pass. The processor then constructs the electronic transaction record, which is stored within the device's memory for subsequent transmission to a centralized billing location or database. The centralized billing location can be a subscriber information database at a wireless switching center of the wireless service provider handling the call.

In an alternative method, the step of electronically transferring information can be performed by means of a loccal proximity connection between a modified wireless terminal of the purchaser and the merchant billing device. The modified wireless terminal is equipped with a billing function key, which is depressed by the purchaser to initiate a billing transaction. The information is locally transmitted from the wireless terminal to a local proximity receiver within the merchant billing device. A billing device processor retrieves the information received and then proceeds with completing and recording the transaction.

### BRIEF DESCRIPTION OF THE DRAWINGS

So that one skilled in the art to which the subject invention pertains will better understand how to practice the invention, preferred embodiments thereof will be described hereinbelow with reference to the drawings, in which like reference numerals depict similar or identical elements, wherein:
FIG. 1 shows a wireless telecommunication network wherein embodiments of the present invention can be employed;
FIG. 2 is a block diagram of a wireless billing system in accordance with the present invention;
FIG. 3 is a block diagram of a merchant billing device;
FIG. 4 is a flow diagram depicting wireless billing methods in accordance with the present invention;
FIG. 5 is a block diagram of an alternate wireless billing system in accordance with the present invention;
FIG. 6 is a block diagram of a merchant billing device, which can be used in the systems of FIGS. 2 or 5;
FIG. 7 is a block diagram of a modified wireless terminal;
FIG. 8 is a flow diagram illustrating another wireless billing method in accordance with the invention; and,
FIG. 9 shows a wireless toll collection system in accordance with the present invention.

### DETAILED DESCRIPTION OF THE PREFERRED EMBODIMENTS

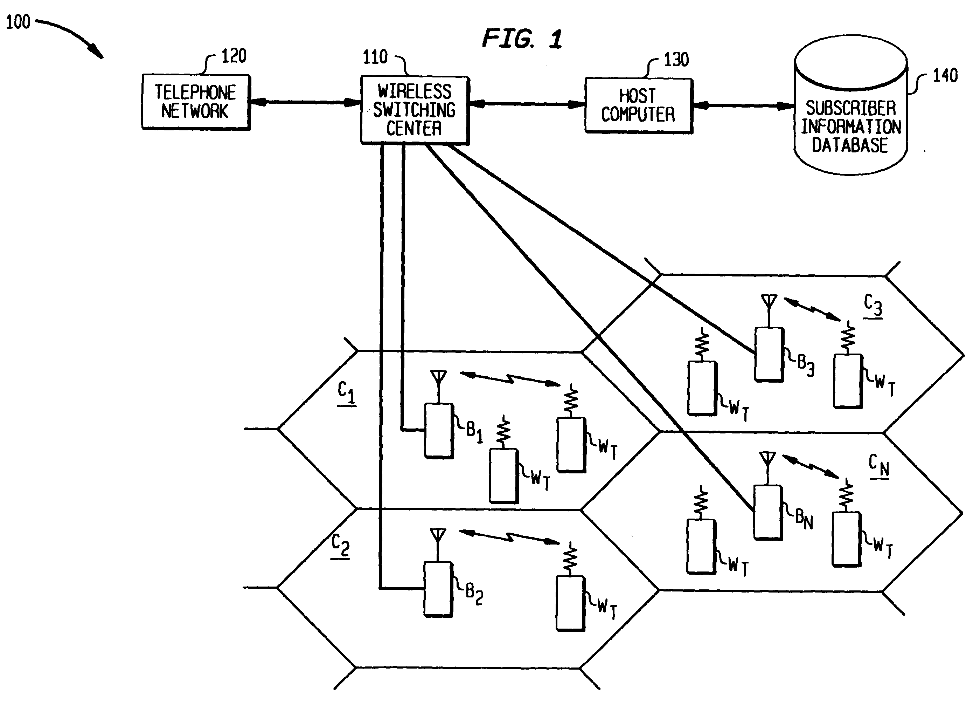

Referring now to the drawings, FIG. 1 depicts a schematic diagram of a wireless telecommunication network, designated generally as 100, wherein embodiments of the present invention can be practiced. Network 100 serves a number of wireless terminals W_{T} that are situated within a given geographic area. This geographic area is typically partitioned into a number of spatially distinct regions, or cells, C₁ to C_{N}. As depicted in FIG. 1, each cell is schematically represented by a hexagon; in practice, however, each cell usually has an irregular shape that depends on the topography of the terrain and other factors.

Typically, each cell C₁ to C_{N} contains a corresponding one of base stations B₁ to B_{N}. Each base station typically includes antennas and radios for communicating with wireless terminals within the associated cell and also includes transmission equipment for communicating with wireless switching center (WSC) 110.

Wireless switching center 110 is interconnected with a wireline telephone network 120, which can provide access for wireline terminals. WSC 110 is responsible for, among other things, routing, or "switching," calls between wireless terminals or, alternatively, between a wireless terminal and a wireline terminal accessible to WSC 110 via telephone network 120.

Telecommunication network 100 is configured to carry and radiate signals that represent various type of information (e.g., audio, video, data, multimedia, etc.). Network 100 is also capable of supporting one or more wireless access technologies (e.g., Frequency Division Multiple Access (FDMA), Time Division Multiple Access (TDMA), Code Division Multiple Access (CDMA)) in providing one or more services (e.g., cordless, cellular, PCS, wireless local loop, SMR/ESMR, two-way paging, etc.).

Wireless switching center 110 and base stations B₁ to B_{N} are typically operated by a service provider, e.g., AT&T. The service provider operates host computer 130, which is interconnected with WSC 110 and subscriber information database 140. Database 140 maintains, among other data, wireless terminal identifications associated with each subscriber and wireless terminal usage and billing data for each subscriber. Host computer 130 monitors the cost of new calls made by or to wireless subscribers and updates corresponding usage and billing information stored within database 140 each time a new call is completed. The service provider typically bills the subscribers on a monthly basis. When bills are paid, the host computer deducts the corresponding amounts from the balances stored within database 140.

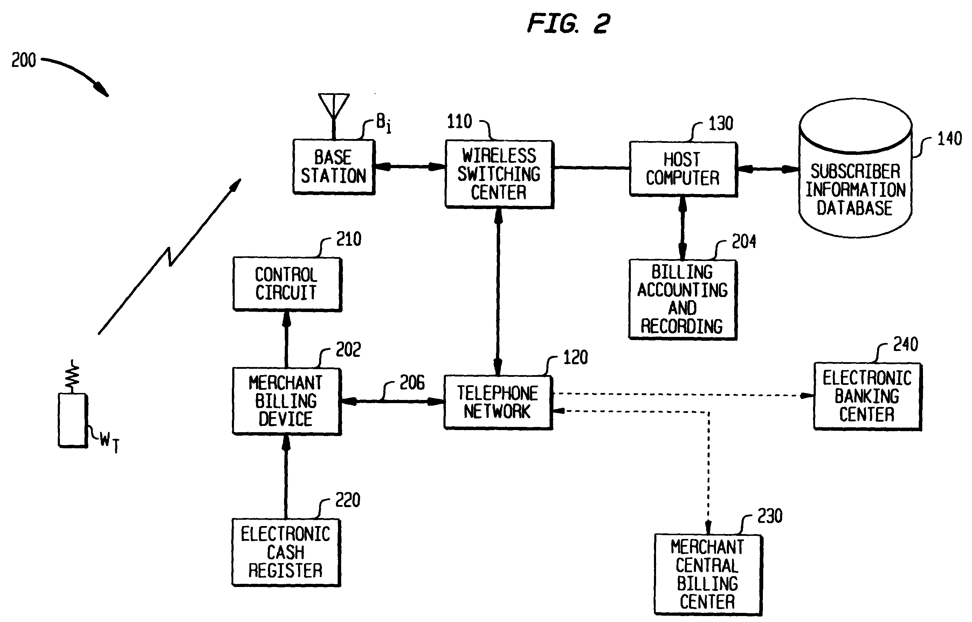

FIG. 2 schematically illustrates a first embodiment of a wireless billing system in accordance with the present invention, designated generally as 200. Wireless billing system 200 enables a subscriber (purchaser) to pay for merchandise or services provided by a merchant by automatically having the cost of such merchandise or services added to the monthly wireless bill issued by the wireless service provider. The wireless service provider can then reimburse the merchant when the wireless bill is paid. Alternative billing approaches involving merchant central billing center 230 and/or electronic banking center 240 are also possible.

The merchant, who may be a toll booth owner, for example, operates merchant billing device 202, which records transactions between the merchant and individual subscribers of the wireless service provider. Billing device 202 includes a telephone transceiver, a processor and associated circuitry to enable the billing device to connect to telephone network 120 on an individual wireline 206. Billing device 202 can thus be "called" by wireless or other wireline terminals at its own telephone number assigned by the telephone network. In the embodiment of FIG. 2, a user of wireless terminal W_{T}, who may be standing in front of billing device 202, and who wishes to acquire a service or merchandise offered by the merchant controlling billing device 202, places a wireless call to the telephone number of billing device 202. The call is routed through base station Bᵢ (typically within cell Cᵢ wherein billing device 202 is located), to wireless switching center 110 and telephone network 120 to billing device 202.

Switching center 110 and telephone network 120 are equipped to supply caller ID information of calling parties to billing device 202. As such, once billing device 202 is called by wireless terminal W_{T}, a transaction can be completed between the merchant and the wireless terminal user. The transaction is completed with the use of either control circuit 210 or electronic cash register 220, or both, as will be explained below. Subsequently, the billing device can automatically transmit invoice information associated with the transaction to host computer 130 and to associated Billing, Accounting and Recording Block 204. Block 204, shown separately from host computer 130, can be a software program running on computer 130. The program functions to add the invoice information submitted by the one or more devices 202 to the associated subscribers' wireless terminal bills stored in database 140.

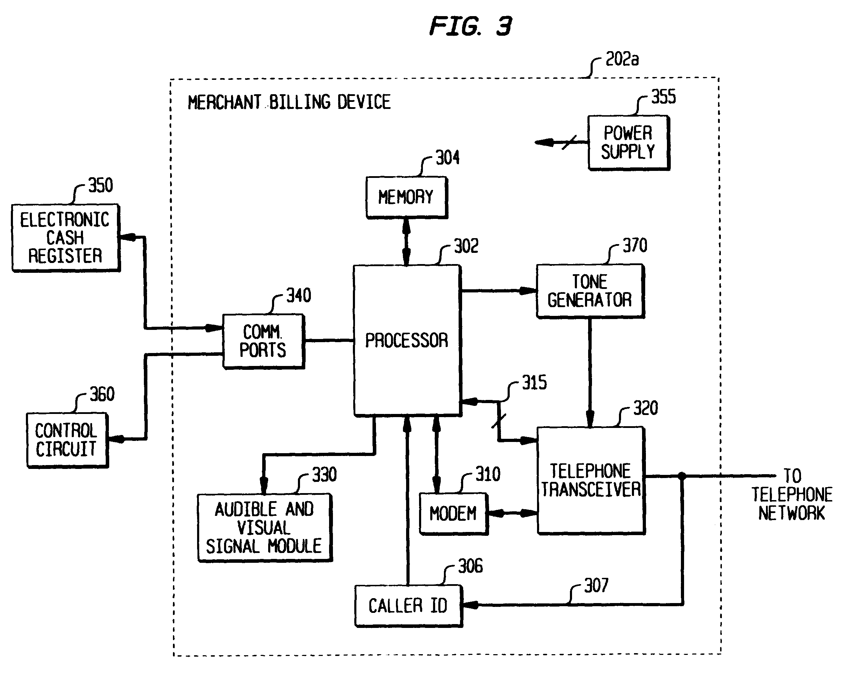

FIG. 3 is a block diagram of an exemplary merchant billing device 202a, which is an embodiment of billing device 202. Billing device 202a typically includes telephone transceiver 320, modem 310, Caller ID module 306, processor 302, memory 304, Audible and Visual Signal Module 330, tone generator 370 and power supply 355 for powering each component of the billing device. Optionally, communication ports 340 such as RS232 or RJ11 are provided to retrieve purchasing information from electronic cash register 350.

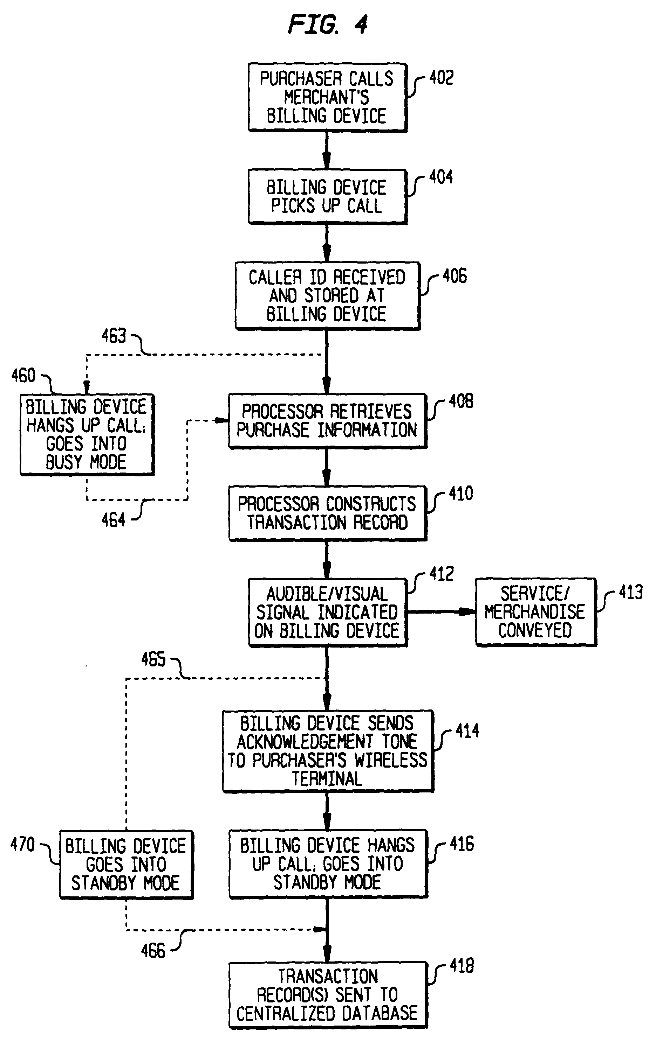

Referring to FIG. 4 in conjunction with FIGs. 2 and 3, a flow diagram illustrating first and second wireless billing methods in accordance with the present invention is shown. In the first method, a wireless terminal subscriber (purchaser) wishing to obtain services or merchandise offered by a merchant operating billing device 202a places a call through the wireless telecommunication network to the merchant's billing device at the device's telephone number (step 402). It is assumed that the purchaser, who may be using a standard wireless terminal, such as a cellular telephone, has prior knowledge of the billing device's telephone number, which may be learned from a sign posted on or in the vicinity of the billing device. The call is received by a suitable base station, routed to the wireless switching center and telephone network and then to billing device 202a where it is automatically picked up by the billing device's telephone transceiver 320 (step 404) under the control of processor 302. If the telephone network is an analog network, as in most public telephone networks, transceiver 320 includes a hookswitch relay and a control switch (not shown), both controlled by processor 302 via control lines 315. The control switch therein switches between tone generator 370 and modem 310 to enable either tones or data to be transmitted by billing device 202a as will be described below. If the telephone network is a digital network, such as ROLMlink™, transceiver 320 would be comprised of a link transceiver and a link interface.

When transceiver 320 picks up the call, Caller ID or Automatic Number Identification (ANI) information is transferred through line 307 to Caller ID module 306 where it is stored (step 406). The Caller ID information corresponds to the telephone number of the wireless terminal W_{T} making the call and can originate either from the wireless terminal directly or from the wireless switching center. In the latter case, the wireless switching center converts identifying information transmitted by the wireless terminal to Caller ID data in an appropriate format.

Caller ID module 306 supplies the Caller ID information received to processor 302 in a suitable format. Processor 302 then retrieves information pertaining to the purchase either from memory 304 directly or from electronic cash register 350 through communication ports 340 (step 408). If billing device 202a is dedicated for a fixed transaction such as the collection of a toll, then the price and item transacted for can be pre-stored in memory 304 and retrieved by processor 302. If billing device 202a is dedicated for a variety of transactions, such as for recording the sale of various types of merchandise at different prices, then processor 302 retrieves the purchase information from electronic cash register 350. Cash register 350 is equipped with its own processor to record transactions and automatically forward the corresponding purchase information to billing device processor 302. Cash register 350 can be a manually operated cash register operated by the merchant, as in a store, or operated by the purchaser to acquire merchandise such as gasoline dispensed from a pump.

The purchase information obtained by processor 302 typically includes the item transacted for, the price and the quantity. If a number of different items or services are purchased during the session, cash register 350 can forward a list of items and corresponding charges to processor 302 at the end of the transaction or when the order is placed. After retrieving the purchase information, processor 302 constructs an electronic transaction record (step 410). The transaction record preferably includes at least: a) the Caller ID information of the purchaser; b) the purchase amount; c) a merchant ID code (or merchant telephone number); and d) the time and date of the transaction.

Processor 302 then sends a command to Audible and Visual Signal Module 330, which responds by sounding an audible tone and/or displaying a visual indicator on billing device 202a, such as a text message, indicating that the transaction has been recorded (step 412). Processor 302 can then cause an acknowledgement tone or other audible message to be sent to the purchaser's wireless terminal notifying the purchaser that the transaction is complete (step 414). This is performed through the telecommunication network by processor 302 first sending a command to the control switch within transceiver 320 to switch to tone generator 370. Processor 302 sends another command to tone generator 370, which responds with a distinct audible tone that is sent through transceiver 320.

Depending on the type of transaction, processor 302 can cause the service or merchandise to be conveyed, either prior to or after the acknowledgement tone is sent, by sending a command to control circuit 360 (step 413). For instance, in a toll booth application, control circuit 360 can be the control circuit for the toll gate that allows a car to pass once the toll is paid. Another example is where the transaction is for the purchase of merchandise dispensed from a dispensing unit such as gasoline from a pump. In the latter case, the purchaser typically operates cash register 350 to select the merchandise desired. Thereafter, control circuit 360 causes the merchandise to be delivered upon receiving the appropriate command from processor 302.

Following the transaction, the transaction record is stored within memory 304. Processor 302 then causes the billing device to terminate the call via a command to transceiver 320 whereupon the billing device goes into a standby mode awaiting further calls (step 416). At a subsequent time, one or more transaction records are sent to a centralized database by means of modem 310 (step 418). The transaction record transmissions may be performed during predetermined times of the day. The centralized database can be subscriber information database 140, which operates in conjunction with host computer 130 and Billing, Accounting and Recording Block 204. Typically, the amounts reflected in the transaction records are added to the corresponding subscribers' wireless service bills. The wireless service provider can then reimburse the merchant once the bills are collected from the subscribers.

The centralized database can alternatively be Merchant Billing Center 230, which is a computerized billing and accounting center controlled by the merchant. With this approach, the merchant can separately bill the subscribers for the merchandise or services rendered via monthly statements or otherwise. Knowledge of the identity of the subscribers would be stored within billing center 230, by previous agreement with individual subscribers, or through information supplied by the wireless service provider. The wireless service provider would then bill the subscribers separately for the cost of the wireless calls to the merchant billing devices.

In another alternative approach to collecting the fees due the merchant, bills could be sent by the merchant to electronic banking center 240, which has accounts with the merchant and with the individual subscribers. The subscribers' accounts contain secured funds, so that the purchase prices for merchandise or fees for services can be automatically deducted from the corresponding subscribers' accounts and added to the merchant's account. Transaction reports can be sent by merchant billing devices 202 directly to electronic banking center 240. Alternatively, the transaction reports can first be sent to merchant central billing center 230, which would then transmit, in a single electronic data transmission, transaction records from a plurality of merchant billing devices 202 to banking center 240 for payment.

A second wireless billing method in accordance with the present invention is a modification of the billing method of FIG. 4 just described. The second method modifies the above-described method of FIG. 4 by adding steps 460 and 470 and eliminating steps 414 and 416, as depicted by dotted lines 463-466. In the second method, an end-to-end connection between the wireless terminal and the merchant billing device is not maintained throughout the transaction. Rather, only the information transfer during the signalling network call setup process is used during the course of the transaction. Steps 402-406 are the same as described above. After Caller ID data is received and stored at merchant billing device 202a in step 406, processor 302 commands transceiver 320 to hang up the call and to go into a busy mode by means of a command on control lines 315 (step 460). Processor 408 then retrieves the purchase information, constructs a transaction record (which is then stored in memory 304), enables an indicator to be sounded and/or displayed, and optionally, causes the service or merchandise to be conveyed (steps 410-413). Processor 302 then causes the billing device to go from a busy mode into a standby mode such that new calls to the device can be received (step 470). Subsequently, transaction records are sent to a centralized database (step 418). It is noted that since acknowledgement tone step 414 is eliminated, the second method can be practiced without the inclusion of tone generator 370 within billing device 202a.

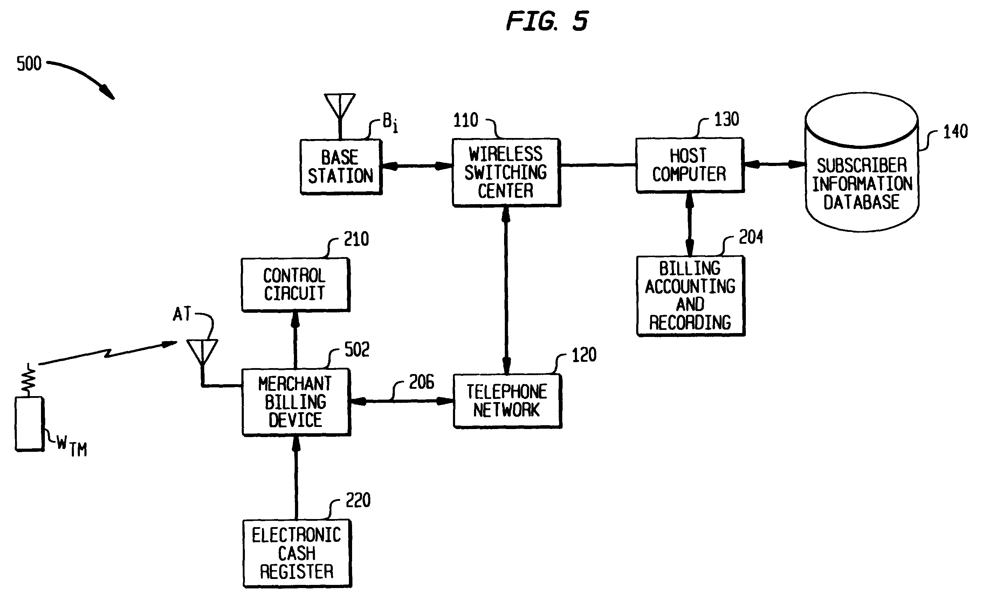

FIG. 5 shows an alternative embodiment of a wireless billing system in accordance with the present invention, designated generally as 500. System 500 employs a local proximity connection between modified wireless terminal W_{TM} and merchant billing device 502. Hence, merchant billing device 502 and modified wireless terminal W_{TM} replace the respective components 202 and W_{T} in FIG. 2. Modified wireless terminal W_{TM} is a modification of a conventional wireless terminal, e.g., a cellular telephone. The modification enables a user to transfer identifying information of the wireless terminal (and hence, of the purchaser) directly to merchant billing device 502 rather than having to complete a call through the wireless telecommunication network to do so. Preferably, identifying information of terminal W_{TM} can only be transferred to billing device 502 when terminal W_{TM} is proximate to the billing device, such as less than 3-10 feet away. Merchant billing device 502 is equipped with antenna AT to receive the identifying information from terminal W_{TM}, such that a transaction between the merchant and the wireless terminal user can be initiated. (It is noted that system 500 could also be used with a conventional wireless terminal W_{T} in a local proximity connection rather than with terminal W_{TM}. This approach, while not preferred, is discussed later).

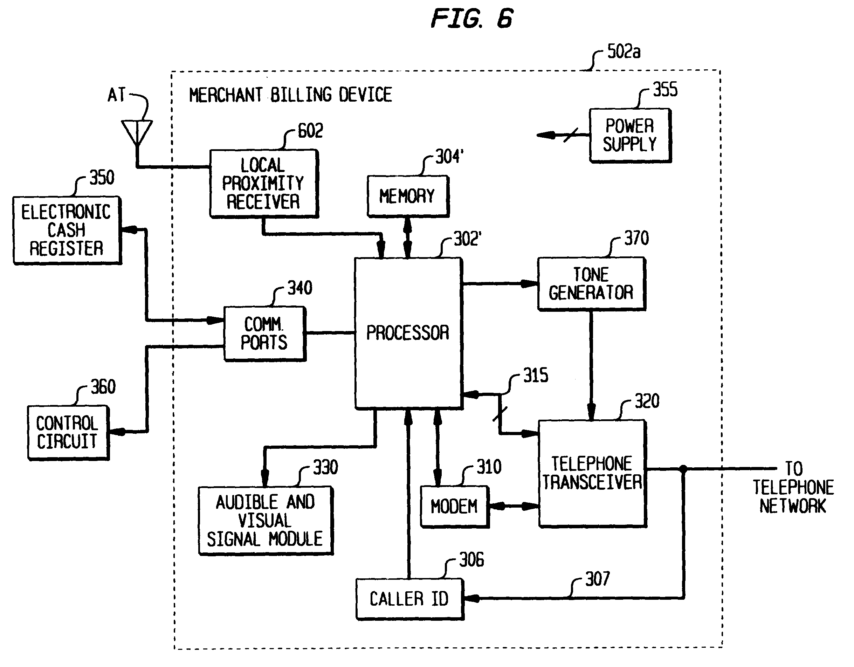

FIG. 6 is a block diagram of an exemplary merchant billing device 502a, which is an embodiment of billing device 502 of FIG. 5. Billing device 502a includes all of the elements of billing device 202a of FIG. 2 with the addition of local proximity receiver 602 and antenna AT. Tone generator 370 is not used in this embodiment; however, it is preferably included to offer a wireless terminal user the option of using the telephone network connection method of FIG. 4 or a local proximity connection method as will be exemplified below.

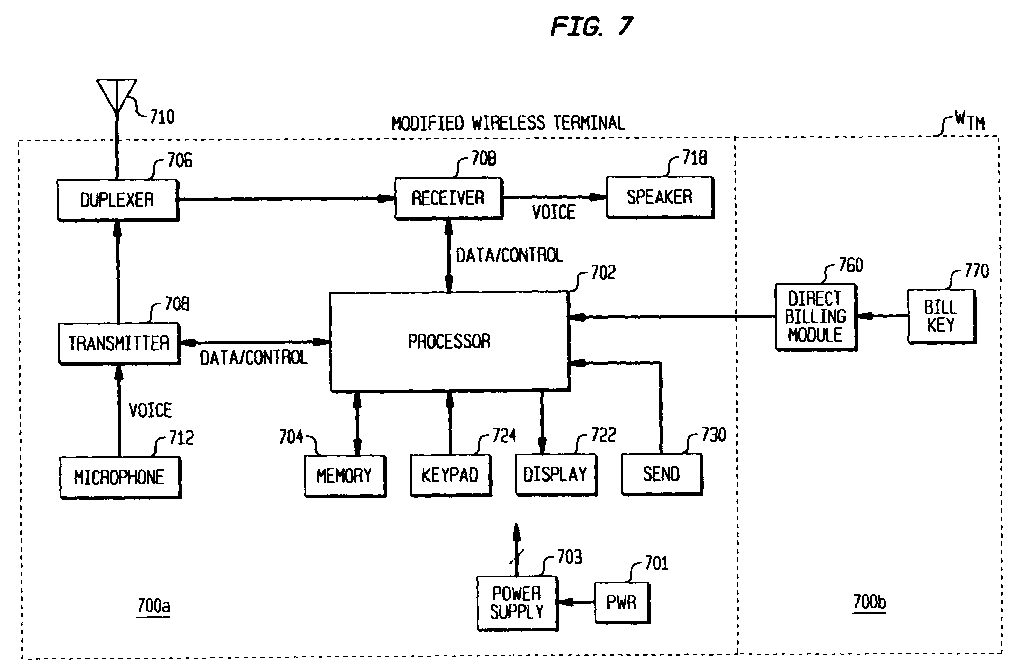

FIG. 7 shows a block diagram of an illustrative modified wireless terminal W_{TM}, which is comprised of two sections, 700a and 700b. Section 700a contains components of a conventional wireless terminal whereas section 700b contains components dedicated solely for wireless billing purposes. When modified wireless terminal W_{TM} is utilized for conventional wireless communication, only section 700a is used. In normal wireless communication use, a user turns on power supply 703 via power button 701 thereby powering all the components within terminal W_{TM}. The user then enters on keypad 724 the telephone number of the party sought to be reached. Processor 702 causes the number to be displayed on display 722. Optionally, to prevent unauthorized use, the user also enters a personal identification number (PIN) on keypad 724. After depressing SEND key 730, a communication set-up process begins in which processor 702 supplies terminal identification data along with the PIN to transmitter 708 to be modulated and transmitted to the base station through duplexer 706 and antenna 710. The terminal identification data, stored within memory 704 and retrieved by processor 702, is unique to the particular modified wireless terminal unit and corresponds to the telephone number or identifying address of that wireless terminal W_{TM}. At the base station or wireless switching center, the PIN is compared to a PIN stored in a database that corresponds to the terminal ID data and if the comparison is favorable, the communication session is allowed to proceed. Control channel signals are received from the base station by receiver 708 and supplied to processor 702. Once a connection is established, voice communication through use of microphone 712 and speaker 718 is possible.

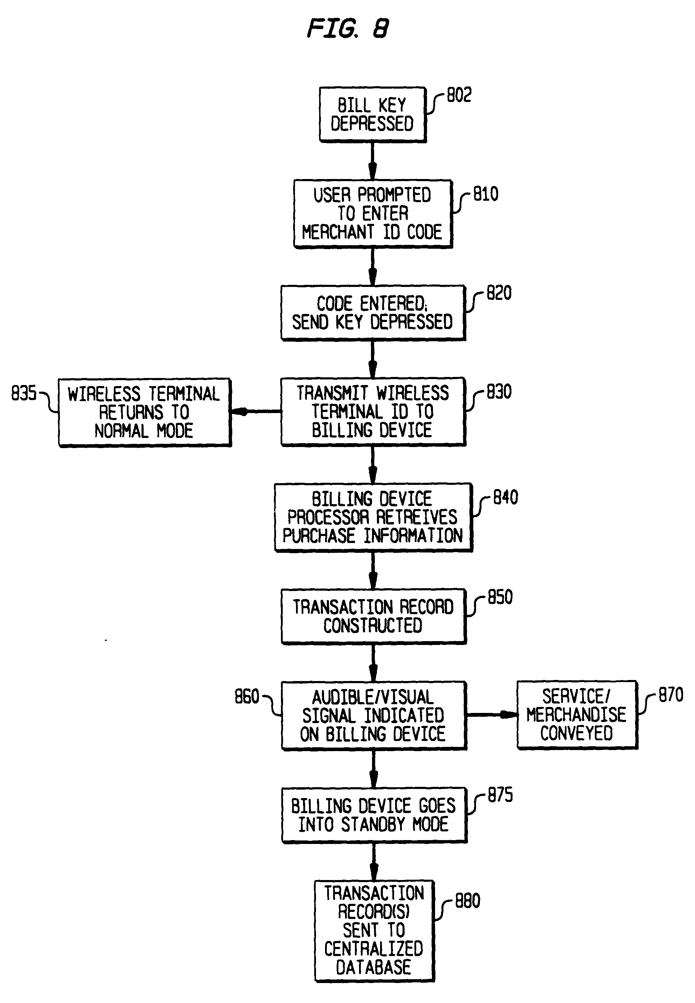

Referring to FIG. 8, in conjunction with FIGs. 5-7, a flow chart depicting method steps of a third embodiment of a wireless billing method in accordance with the present invention is shown. When the user (purchaser) desires to pay for a transaction with a particular merchant billing device 502a using modified wireless terminal W_{TM}, the user depresses BILL function key 770 (step 802). Depression of BILL key 770 activates Direct Billing Module 760 and causes a prompt to be displayed on display 722 prompting the user to enter a merchant ID code associated with the merchant or with the particular merchant billing device 502a (step 810). This can be, for example, a one to four digit number displayed on a sign posted on or in the vicinity of the merchant billing device. Optionally, the user can also be prompted to enter his or her PIN to guard against unauthorized purchases. Direct Billing Module 760 can be an Application Specific Integrated Circuit (ASIC) having its own processor, which is designed to interact with processor 702 to provide the billing functions. Alternatively, Direct Billing Module 760 can be a software program running on processor 702, in which case BILL key 770 would be coupled directly to processor 702.

Once the code(s) are entered, the user depresses SEND key 730 to initiate a transaction with merchant billing device 502 (step 820). Direct Billing Module 760, in conjunction with processor 702, responds by retrieving the wireless terminal ID number stored within memory 704 and supplying a data stream to transmitter 708 including the terminal ID number, the PIN, if used, and the merchant ID number. Preferably, Billing Module 760 also concurrently provides a power control signal on lines 723 causing transmitter 708 to operate in a low radiated power mode using radiated power substantially less than that used during normal wireless communication transmissions to base stations. This reduces potential interference with other wireless billing modules 502 that may be nearby. Billing Module 760 sends another concomitant control signal on lines 723 controlling the carrier frequency generated within transmitter 708 that is modulated by the data stream. Preferably, the frequency channel used for transmission of the modulated data stream to wireless billing device 502 is different from the control and communication channels normally used during wireless communication to and from the wireless base stations.

Transmitter 708 transmits the modulated data stream to wireless billing device 502a, which receives the data using antenna AT and local proximity receiver 602 (step 830). Wireless terminal 502a then returns to a normal mode (step 835) whereby the user can either transmit or receive normal wireless communications or initiate another billing transaction using the BILL key. Local proximity receiver 602 is designed to respond only to signals received that are above a predetermined power level threshold, such that only wireless terminals within a specified distance away can successfully transmit data and initiate a transaction. The predetermined threshold is selected in conjunction with the power level radiated by the modified wireless terminal, which will always be within a standard specified power level range.

In merchant billing device 502a, once the data stream is successfully received, receiver 602 supplies the data to billing device processor 302'. Processor 302' compares the merchant ID portion of the received data to a billing device ID number stored within memory 304'. An unfavorable comparison indicates that the user either entered the wrong merchant ID number or the data that was received originated from another wireless terminal W_{TM} attempting to communicate with another merchant billing device nearby. Thus, if the merchant ID number received is incorrect, the transaction will not be completed and processor 302' can indicate this condition to the purchaser via Audible and Visual Signal Module 330.

If the merchant ID number received is correct, processor 302' proceeds with the transaction by retrieving the purchase information either from memory 304' or from electronic cash register 350 (step 840). Steps 850, 860 and 870 then follow, such steps being basically the same as steps 410, 412 and 413, respectively, of FIG. 4. After the transaction is completed, the merchant billing device enters a standby mode whereby new transactions can be initiated by other wireless terminals (step 875). At a later time, transaction records are downloaded to a centralized database in a manner similar to that described in the first and second methods above.

It is noted that each merchant billing device 502a has its own telephone number but may only operate in the telephone network to transmit transaction records and not to receive calls. The transaction records preferably include the merchant billing device telephone number or some other identifying number. Alternatively, merchant billing device 502a can also receive calls, such that a wireless terminal user has the option of either using a local proximity connection or a connection through the wireless telecommunications network to initiate transactions. This enables purchasers with or without modified wireless terminals to use a wireless billing method in accordance with the present invention.

It is further noted that the transaction records can include the PIN supplied by the wireless terminal user (if used). With this approach, unauthorized transactions might not be prevented initially but would be prevented in future uses. For example, wireless service providers may transmit to each merchant billing device fraudulent use data of particular wireless terminals via the telephone network. Processor 302' would then cause the fraudulent use data to be stored within memory 304'. During subsequent transactions, processor 302' would compare the PINs and/or the wireless terminal ID codes received in the local proximity connection with the fraudulent use data stored within memory 304'.
Transactions would be prevented upon favorable comparison with the fraudulent use data.

As mentioned above, wireless billing system 500 (FIG. 5) could also be used in a local proximity mode with wireless terminal W_{TM} embodied as a conventional wireless terminal. In this embodiment, a user of the conventional wireless terminal would enter on the wireless terminal keypad the merchant ID code of the particular billing device 502 to be transacted with (e.g., a one to four digit number). Then, steps 820-880 of FIG. 8 are followed. The user would depress the SEND key on the wireless terminal in proximity to billing device 502 (step 820). This causes wireless terminal identification data to be transmitted along with the merchant ID code that was entered (steps 830-835). Local proximity receiver 602 (FIG. 6) receives the transmission and relays the received data to processor 302', which initiates and completes a transaction only if the merchant ID code received corresponds to the ID code stored within memory 304' (steps 840-880).

As an alternative to this latter approach, the conventional wireless terminal user can simply depress the SEND key on his wireless terminal when in proximity to merchant billing device 502 without entering a merchant ID code. Billing device 502 would receive the wireless terminal ID data and proceed with the transaction without comparing merchant ID data to stored data. This approach, while simpler than those described above, has a higher probability of transaction error. Without the merchant ID code comparison safeguard, if several merchant billing devices are in close proximity to each other, a particular billing device may pick up a wireless terminal ID transmitted from another wireless terminal that did not intend to transact with that particular billing device.

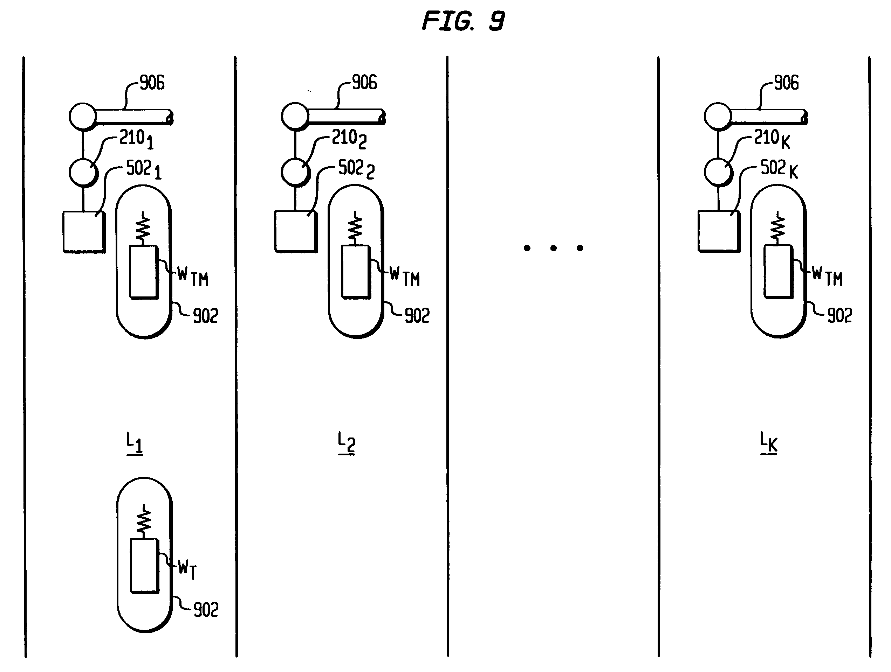

FIG. 9 illustrates a wireless toll collection system, designated generally as 900, which employs one or more of the above-described wireless billing methods. In each of a plurality K of toll lanes L₁-L_{K}, a corresponding merchant billing device 502₁-502_{K} is located in proximity to a respective gate 906₁-906_{K}. Control circuits 210₁-210_{K} control the gates, responsive to commands received from the merchant billing devices to thereby allow or prevent vehicles 902 to pass. Purchasers in vehicles 902 carry either conventional wireless terminals W_{T} or modified wireless terminals W_{TM}, which are used to pay the toll using one of the above-described methods in accordance with the present invention. Thus, a local proximity connection or a telephone network connection can be established to initiate the transaction and pay the toll. Electromagnetic shielding can be employed between the toll lanes to reduce the possibility of interference and billing errors due to the many wireless terminals simultaneously transmitting data. Transaction records, which preferably include the toll location, are sent to a centralized database such as subscriber information database 130.

It is understood that merchant billing devices 502 and/or 202 can be modified to function as stand alone wireless communication devices rather than being hardwired to the wireline telephone network. With this approach, all communication with the merchant billing devices, including the downloading of transaction records, would be performed wirelessly. In a wireless embodiment of either merchant billing device 202 or 502, the wireless terminals of the subscribers, and most aspects of the above-described methods, could remain the same. Connections from wireless terminal users to billing device 202 would be made through the wireless switching center and the same base station used by the purchaser's wireless terminal rather than through the wireline telephone network.

It is further understood that merchant billing devices 502 and/or 202 can be modified to incorporate a local transmitter capable of transmitting merchant ID or other information locally to either wireless terminal W_{T} or W_{TM} to initiate a transaction rather than the wireless terminal initiating the transaction. In this embodiment, either the local proximity connection method or one of the telephone network connection methods described above would then follow the billing device's transmission. The wireless terminal would preferably be modified to be capable of receiving and automatically responding to the billing device's transmission, such as by prompting the user to depress the SEND key or the BILL key (if employed) on the wireless terminal to continue the transaction. The user would not be required to obtain and enter a merchant ID code since the wireless terminal already received this information. The merchant ID code could then be automatically transmitted back to the billing device along with the wireless terminal ID to enable the transaction to be completed.

Although the subject invention has been described with respect to preferred embodiments, it will be readily apparent to those having ordinary skill in the art to which it appertains that changes and modifications may be made thereto without departing from the spirit or scope of the subject invention as defined by the appended claims.

## Claims

1. A method of billing, comprising:
electronically transferring identifying information associated with a wireless terminal of a purchaser, automatically during a call set-up, from the wireless terminal through a telephone network to a merchant's billing device to initiate a transaction between the purchaser and the merchant;
receiving, at a centralized billing location, an electronic record of the transaction between the purchaser and the merchant, wherein said record is created at the merchant's billing device and transmitted therefrom, said record containing at least said identifying information of the purchaser and an amount transacted; and,
billing the purchaser for the amount transacted.

2. A method of billing as recited in Claim 1, wherein said electronically transferring identifying information includes:
forwarding Caller Identification (Caller ID) information indicative of the purchaser's wireless terminal to the billing device during a call attempt from the purchaser's terminal; and,
subsequently disconnecting the call attempt.

3. A method of billing as recited in Claim 1, wherein said electronically transferring identifying information includes:
forwarding Caller Identification (Caller ID) data indicative of the purchaser's wireless terminal to the merchant's billing device; and,
maintaining an end-to-end telephone network connection between the purchaser's wireless terminal and the merchant's billing device during the course of the transaction.

4. A method of billing as recited in Claim 3, further comprising acknowledging completion of the transaction by transmitting an audible tone or message from the merchant's billing device to the purchaser's wireless terminal via the telephone network.

5. A method of billing is recited in Claim 1, further comprising commanding a control circuit via a command generated by the merchant's billing device to provide a service or convey merchandise to the purchaser, thereby completing the transaction.

6. A method of billing as recited in Claim 10, wherein said control circuit controls a toll gate in a toil lane to control passage of vehicles.

7. A method of billing, comprising:
electronically transferring identifying information of a purchaser from a wireless terminal of the purchaser to a merchant billing device to initiate a transaction between the purchaser and the merchant, said identifying information being transmitted at a radiated power level substantially less than radiated power levels used in wireless communications between said wireless terminal and a base station in a wireless communications network;
receiving the identifying information at the merchant's billing device with a local proximity receiver;
said merchant billing device creating an electronic record of the transaction including at least said identifying information and an amount transacted;
said billing device transmitting said record to a centralized billing location; and
billing the purchaser for the transaction.

8. A method of billing as recited in Claim 7, wherein said electronically transferring identifying information includes:
activating a billing module associated with the purchaser's wireless terminal to prompt the purchaser to enter a merchant's identification (ID) code into the wireless terminal;
transmitting the merchant's ID code and the identifying information of the purchaser from the purchaser's wireless terminal to the merchant's billing device; and,
receiving the identifying information and the merchant ID code with said local proximity receiver.

9. A method of billing as recited in any of Claims 1 or 7, wherein said billing device is dedicated for a fixed transaction and wherein said creating an electronic record includes retrieving by a processor within said billing device purchase information including the cost of the transaction stored in a memory within said billing device.

10. A method of billing as recited in any of Claims 1 or 7, wherein said creating an electronic record includes receiving by a processor within said billing device purchase information including the cost of the transaction from a manually operated electronic cash register associated with said billing device.

11. A method of billing as recited in any of Claims 1 or 7, wherein said billing the purchaser includes deducting the transacted amount from a secured set of funds or credits in an electronic banking center.

12. A billing device, comprising:
a local proximity receiver for receiving identifying information of a purchaser transmitted from a wireless terminal of the purchaser at a radiated power level substantially less than radiated power transmitted by said wireless terminal when communicating with a base station in a wireless telecommunication network;
a processor for creating an electronic record of a transaction between the purchaser and a merchant, said record including at least said identifying information of the purchaser and an amount transacted; and
a transmitter for transmitting the transaction record to a centralized billing system wherein the amount transacted is charged to the purchaser.

13. A billing device, comprising:
a receiver for receiving, through a telephone network, identifying information associated with a wireless terminal of a purchaser and automatically transmitted by the wireless terminal during a call set-up;
a processor for creating an electronic record of a transaction between the purchaser and a merchant, Said record including at least said identifying information of the purchaser and an amount transacted; and
a transmitter for transmitting the transaction record to a centralized billing system wherein the amount transacted is charged to the purchaser.

14. A billing device as recited in any of Claims 12 or 13, further comprising a memory for storing purchase information and further wherein said processor is operable to retrieve said purchase information from said memory for inclusion within said transaction record, and further to cause said transaction record to be stored within said memory.

15. In a wireless terminal operable in a wireless telecommunication system, said wireless terminal including a memory for storing identifying information of said wireless terminal and a processor operational to retrieve said identifying information during a call set-up, the improvement therein comprising:
a billing key coupled to said processor for causing said wireless terminal to transmit, when said billing key is depressed, said identifying information stored by said memory to a location proximate to said wireless terminal to initiate a transaction between a user of said wireless terminal and a billing device that receives the identifying information.

16. The wireless terminal according to Claim 15, wherein said improvement further comprises:
means associated with said processor for prompting the user, after said billing key is depressed, to enter a merchant identification code, said merchant identification code being transmitted in modulate data stream along with said identifying information to initiate the transaction.
